# EUROPEAN PATENT APPLICATION

(11) **EP 2 767 811 A1**
(43) Date of publication of application: **20.08.2014**
(21) Application number: 14154731.5
(22) Date of filing: 11.02.2014
(51) Int. Cl.: G01K 7/02, G01K 7/18, G01K 13/02

(54) **Embedded resistance temperature detector assembly**

(30) Priority: 13.02.2013 US 201313766062
(71) Applicant: Unison Industries LLC, Jacksonville, FL 32256 (US)
(72) Inventor: Farnsworth, Victor Paul, Jacksonville, FL Florida 32256 (US)
(74) Representative: Williams, Andrew Richard

(57) **Abstract**

An embedded resistance temperature detector assembly (31) comprises a first multi-conductor controller cable (54) and a second multi-conductor controller cable (56), the first multi-conductor controller cable in electrical communication with a first resistance temperature detector (46), the second multi-conductor controller cable in electrical communication with a second resistance temperature detector (46), a first pair of thermocouple KN and KP conductors (80,82), a second pair of thermocouple KN and KP conductors (80,82), all of the controller cables in electrical communication with a controller (90), the first and second pair of thermocouple conductors in communication with conductors of at least one third multi-conductor cable.

## Description

### BACKGROUND

Present embodiments relate generally to gas turbine engines. More particularly, but not by way of limitation, present embodiments relate to an embedded resistance temperature detector assembly for use in a gas turbine engine.

A typical gas turbine engine generally possesses a forward end and an aft end with its several core or propulsion components positioned axially therebetween. An air inlet or intake is at a forward end of the engine. Moving toward the aft end, in order, the intake is followed by a compressor, a combustion chamber, a turbine, and a nozzle at the aft end of the engine. It will be readily apparent from those skilled in the art that additional components may also be included in the engine, such as, for example, low-pressure and high-pressure compressors, and high-pressure and low-pressure turbines. This, however, is not an exhaustive list. An engine also typically has an internal shaft axially disposed along a center longitudinal axis of the engine. The internal shaft is connected to both the turbine and the air compressor, such that the turbine provides a rotational input to the air compressor to drive the compressor blades.

In operation, air is pressurized in a compressor and mixed with fuel in a combustor for generating hot combustion gases which flow downstream through turbine stages. These turbine stages extract energy from the combustion gases. A high pressure turbine first receives the hot combustion gases from the combustor and includes a stator nozzle assembly directing the combustion gases downstream through a row of high pressure turbine rotor blades extending radially outwardly from a supporting rotor disk. In a two stage turbine, a second stage stator nozzle assembly is positioned downstream of the first stage blades followed in turn by a row of second stage rotor blades extending radially outwardly from a second supporting rotor disk. The turbine converts the combustion gas energy to mechanical energy. The second stage turbine blades and rotor disk are mechanically coupled to a low pressure or booster compressor for driving the booster compressor and additionally an inlet fan.

During the operation of the gas turbine engine, it is necessary to obtain temperature readings at different locations in the engine. This data is utilized by the engine control logic to properly operate the engine and provide maximum performance at the highest efficiency. These probes utilize thermocouples, typically having a dissimilar metal to create a differential which may be then related to a temperature which is provided to the engine control logic. These probes utilize type-K thermocouples typically having dissimilar metals to create a differential which may be then input to the engine control logic to optimize performance.

Wiring for exemplary sensors must run relatively long distances to a controller or signal input area. However, leads associated with the sensors such as thermocouples are very expensive. It would be appreciated to derive a system which decreases the amount of high cost thermocouple wire extending between the thermocouple and a controller. However, doing so requires some means of ensuring accuracy of the temperature reading at the thermocouple.

As may be seen by the foregoing, it would be desirable to overcome these and other deficiencies with gas turbine engine components.

### SUMMARY

According to present embodiments, an embedded resistance temperature detector assembly is provided which eliminates the need for longer runs of thermocouple wire which is expensive and provides a structure that allows the use of lower cost conductors between a thermocouple and a controller.

According to some embodiments, an embedded resistance temperature detector assembly comprises a first multi-conductor controller cable and a second multi-conductor controller cable, the first multi-conductor controller cable in electrical communication with a first resistance temperature detector, the second multi-conductor controller cable in electrical communication with a second resistance temperature detector, a first pair of thermocouple KN and KP conductors, a second pair of thermocouple KN and KP conductors, all of the controller cables in electrical communication with a controller, the first and second pair of thermocouple conductors in communication with conductors of at least one third multi-conductor cable.

All of the above outlined features are to be understood as exemplary only and many more features and objectives of the invention may be gleaned from the disclosure herein. Therefore, no limiting interpretation of this summary is to be understood without further reading of the entire specification, claims, and drawings included herewith.

### BRIEF DESCRIPTION OF THE ILLUSTRATIONS

Embodiments of the invention are illustrated in the following illustrations.
FIG. 1 is a side section view of a gas turbine engine.
FIG. 2 is a schematic view of an exemplary resistance temperature detector assembly.
FIG. 3 is a side view of a cable assembly housing the assembly of FIG. 2.
FIG. 4 is a side section view of an exemplary cable assembly.
FIG. 5 is a top view of an exemplary joint utilized in said housing.
FIG. 6 is a side view of said joint of FIG. 5.
FIG. 7 is an exemplary wiring diagram.

### DETAILED DESCRIPTION

Reference now will be made in detail to embodiments provided, one or more examples of which are illustrated in the drawings. Each example is provided by way of explanation, not limitation of the disclosed embodiments. In fact, it will be apparent to those skilled in the art that various modifications and variations can be made in the present embodiments without departing from the scope of the disclosure. For instance, features illustrated or described as part of one embodiment can be used with another embodiment to still yield further embodiments. Thus it is intended that the present invention covers such modifications and variations as come within the scope of the appended claims and their equivalents.

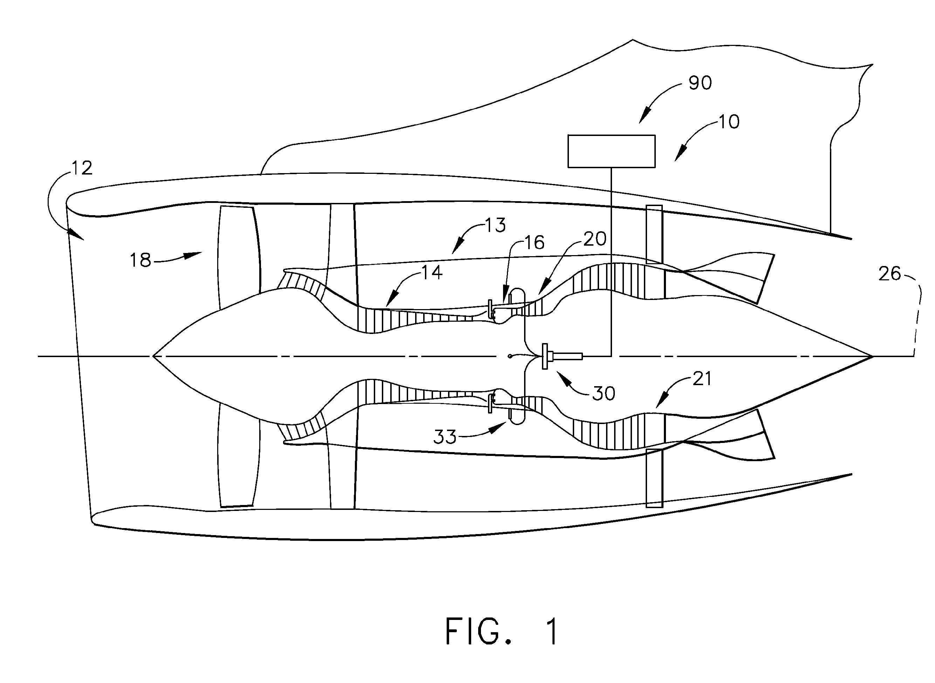

Referring to FIGS. 1-7 various embodiments of an embedded resistance temperature detector assembly are shown. More specifically, the resistance temperature detector assembly utilizes a joint to connect expensive thermocouple wires or conductors with less expensive, for non-limiting example, copper or copper-based conductors. The less expensive conductors may be run longer distances

As used herein, the terms "axial" or "axially" refer to a dimension along a longitudinal axis of an engine. The term "forward" used in conjunction with "axial" or "axially" refers to moving in a direction toward the engine inlet, or a component being relatively closer to the engine inlet as compared to another component. The term "aft" used in conjunction with "axial" or "axially" refers to moving in a direction toward the engine nozzle, or a component being relatively closer to the engine nozzle as compared to another component.

As used herein, the terms "radial" or "radially" refer to a dimension extending between a center longitudinal axis of the engine and an outer engine circumference. The use of the terms "proximal" or "proximally," either by themselves or in conjunction with the terms "radial" or "radially," refers to moving in a direction toward the center longitudinal axis, or a component being relatively closer to the center longitudinal axis as compared to another component. The use of the terms "distal" or "distally," either by themselves or in conjunction with the terms "radial" or "radially," refers to moving in a direction toward the outer engine circumference, or a component being relatively closer to the outer engine circumference as compared to another component.

As used herein, the terms "lateral" or "laterally" refer to a dimension that is perpendicular to both the axial and radial dimensions.

Referring initially to FIG. 1, a schematic side section view of a gas turbine engine 10 is shown having an engine inlet end 12 wherein air enters the propulsor or core 13 which is defined generally by a compressor 14, a combustor 16 and a multi-stage high pressure turbine 20. Collectively, the propulsor 13 provides thrust or power during operation. Although the gas turbine 10 is shown in an aviation embodiment, such example should not be considered limiting as the gas turbine 10 may be used for aviation, power generation, industrial, marine or the like.

In operation air enters through the air inlet end 12 of the engine 10 and moves through at least one stage of compression where the air pressure is increased and directed to the combustor 16. The compressed air is mixed with fuel and burned providing the hot combustion gas which exits the combustor 16 toward the high pressure turbine 20. At the high pressure turbine 20, energy is extracted from the hot combustion gas causing rotation of turbine blades which in turn cause rotation of the high pressure shaft (not shown). The high pressure shaft passes toward the front of the engine to continue rotation of the one or more compressor stages 14, a turbofan 18 or inlet fan blades, depending on the turbine design. The turbofan 18 is connected by the low pressure shaft (not shown) to a low pressure turbine 21 and creates thrust for the turbine engine 10. A low pressure turbine 21 may also be utilized to extract further energy and power additional compressor stages. The low pressure air may be used to aid in cooling components of the engine as well.

The gas turbine 10 is axis-symmetrical about engine axis 26 so that various engine components rotate thereabout. The axis-symmetrical high pressure shaft extends through the turbine engine forward end into an aft end and is journaled by bearings along the length of the shaft structure. The shaft rotates about a centerline 26 of the engine 10. The high pressure shaft may be hollow to allow rotation of a low pressure turbine shaft therein and independent of the shaft rotation. Shaft also may rotate about the centerline axis 26 of the engine. During operation the shaft rotates along with other structures connected to the shaft such as the rotor assemblies of the turbine in order to create power or thrust for various types of turbines used in power and industrial or aviation areas of use.

Referring still to FIG. 1, the schematic shows a controller 90 which is connected by a cable assembly 30 to one or more thermocouples 33 spaced about the engine 10, for example the core 13. The thermocouples 33 may be located in various positions, but according to the exemplary embodiment is reading temperature at the combustor 16. The instant resistance temperature detector assembly located within the cable assembly 30 allows use of less expensive wiring to make long runs through the engine to the controller 90, rather than use the expensive thermocouple wiring to make the longer runs. Additionally, this is done without losing the accuracy of the temperature reading at the one or more thermocouples 33.

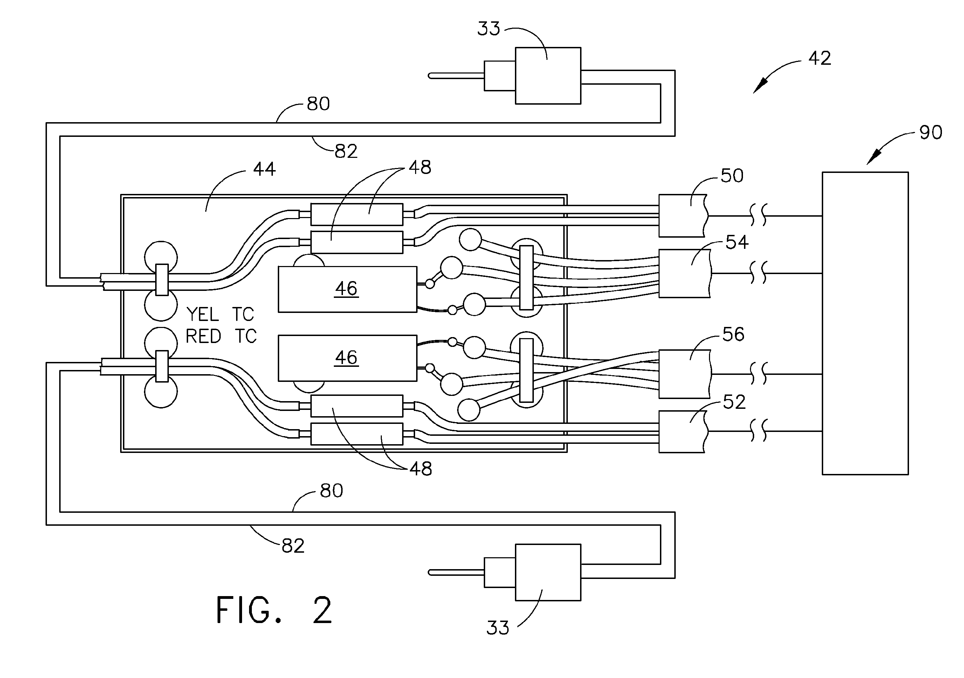

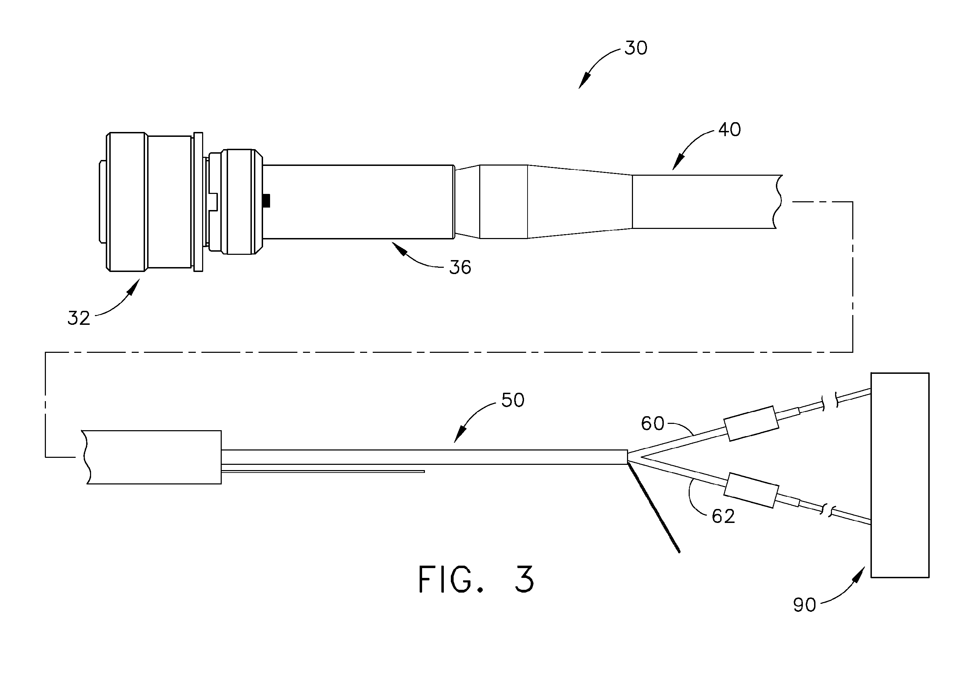

Referring now to FIG. 2, a schematic view of an exemplary resistance temperature detector assembly 31 is shown. The temperature detector assembly 31 includes a joint 42 which may or may not include a printed circuit board 44. Thermocouples 33 are connected through a connector interface 32, such as a plug, and thermocouple wires 80, 82 to controller cables 50, 52. The controller cables 50, 52 utilize less expensive conductor material to carry signal to a controller 90. One KN wire and one KP wire 80, 82 extend from each thermocouple 33 and, by way of connector or interface 32 (FIG. 3), are connected to controller cables 50, 52 having less expensive conductor material such as copper or copper-based wires 60, 62 (FIG.3). These connections provide a signal to the controller.

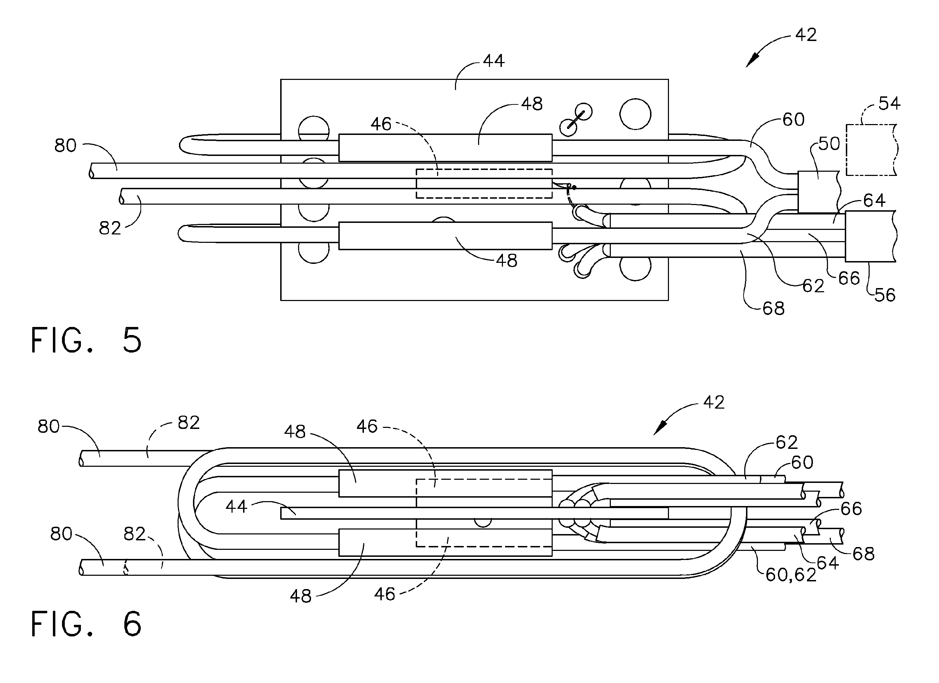

A resistance temperature detector (RTD) 46 is located at the joint 42 to measure temperature conditions at the location where the splices 48 connect the thermocouple wires 80,82 to the lower cost conductors 60, 62 of cables 50, 52. In the depicted schematic, there are two RTDs 46 on one side of the joint 42. As shown in FIG. 6 however, the RTDs 46 may be on opposite sides of the joint 42. The resistance of the RTD 46 is also sent as a signal to the controller 90 by way of cables 54, 56. The cables 54, 56 each include multiple conductors, for example conductors 64, 66, 68. These conductors each extend to and are connected with the controller 90, either directly or indirectly, to input a resistance signal to the controller 90 for determination of the temperature at the thermocouples 33.

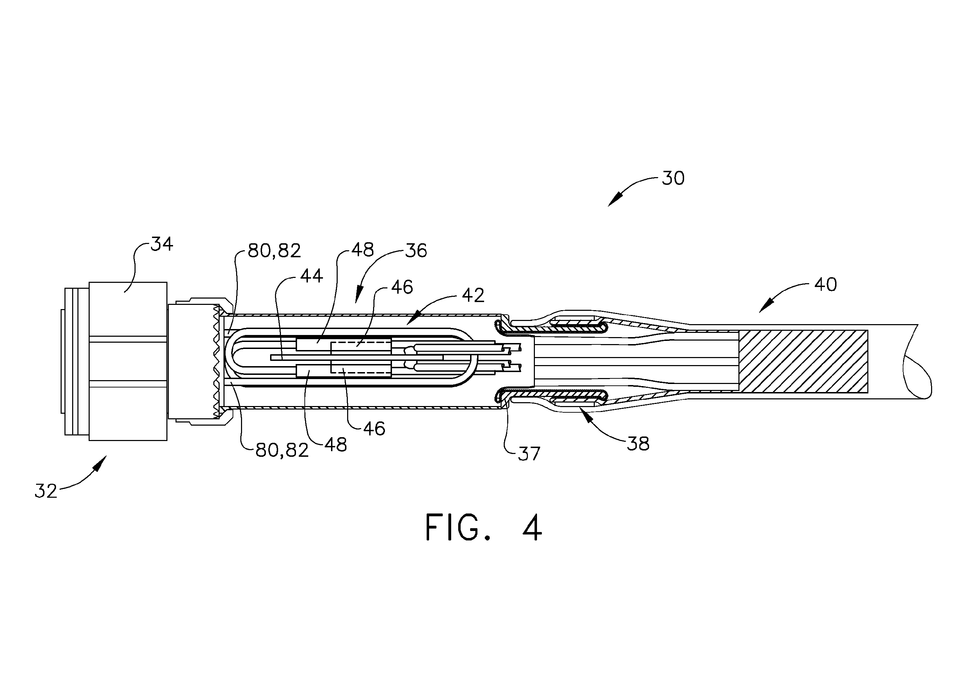

Referring now to FIG. 3, a side view of a cable assembly 30. The assembly includes a connector plug 32 which is connected to a backshell 36 and a cable housing 40 through which a plurality of cables 50, 52, 54, 56 (FIG. 2) are positioned. The plug connector 32 may be push-pull type or a screw type, for example male or female, with a hex nut (FIG. 4) for tightening to an adjacent connector, for example of a thermocouple assembly or additional cable assembly which may extend to a thermocouple 33 (FIG. 1).

The backshell 36 is shown as a straight or linear extending piece however, this backshell may be formed in various manners including, but not limited to, a 45 degree bend or a 90 degree bend between the housing 40 and the connector plug 32.

The housing 40 extends linearly in the figure and may be wrapped around the engine core 13 in operation. Within the housing 40 are a plurality of controller cables, for example cable 50. Each of the cables includes at least one conductor 60, 62. These conductors extend to a controller 90 which receives the temperature inputs and may be utilized by the engine avionics to make logic decisions in flight control based upon the input, for example air temperatures, provided.

Referring now to FIG. 4, a detail section view of a portion of the cable assembly 30 is depicted. The connector 32 may be of various forms as previously described. The instant embodiment utilizes a connector nut 34 which allows fastening of the connector 32 to a thermocouple 33 or other connector portion of the engine which receives a thermocouple. Alternatively, the connector 32 may be a push-pull plug type as previously described or other types of connectors or interfaces for electrical connections. Within the connector 32, the pairs of wires 80,82 connect to contacts (not shown) within the plug interface which will extend for signal communication to the thermocouples 33 (FIGs. 1, 2).

Within the backshell 36 is the joint assembly 42 which provides thermocouple wires 80, 82 in connection with the controller cables 50, 52. The connection may be spliced via crimping, welding soldering or other such connection to provide electrical communication. The thermocouple wires 80, 82 are spliced or otherwise joined with the controller cables 50, 52 to provide a temperature signal to the controller 90 (FIG. 3). The joint 42 further comprises a resistance temperature detector 46. The resistance temperature detector 46 utilizes electrical resistance to aid in determining temperature at a location, in this instance at the joint 42.

The backshell 36 includes at least one potting mixture therein however, the RTDs 46 need to sense ambient conditions surrounding the backshell 36. Accordingly, in one embodiment, a first thermally conductive silicone compound is utilized to surround the joint 42 which may or may not include the printed circuit board 44. Once the first compound is cured and the joint is located in the backshell 36, a second silicone compound is used to fill the backshell. The second exemplary silicone compound is comprises micro-glass beads. This combination provides a thermally reactive potting mixture which allows operation of the RTDs 46.

To the right of the backshell 36, the cable housing 40 is depicted connected to the backshell 36 in one of various fashions that may be utilized. The instant embodiment utilizes a crimp structure with a ground ring 37 and clamping band 38. The housing 40 may be slidably positioned over the ground ring 37 which inhibits removal by tension on or between the connector plug 32 and the cable housing 40.

Referring now to FIG. 5, a top view of an exemplary joint structure 42 is depicted. The joint 42 may include two embodiments, the first of which utilizes a printed circuit board 44. A second embodiment may eliminate the printed circuit board such that the conductors of cables 54, 56 are directly spliced with corresponding resistance temperature detectors 46. Referring again to the first embodiment depicted, on the printed circuit board 44 is the resistance temperature detector 46. Additionally, the joint 42 includes two sets of cables. The first set of wires are the thermocouple wires 80, 82. An additional set of wires 80, 82 are not shown as they are below the wires 80, 82 which are shown. Both pairs of wires 80, 82 are shown int eh side view of FIG. 6. The second set of cables being the controller cables 50, 52, 54, 56 which extend from the joint 42 to a controller 90 (FIG. 3) which receives input signals. As previously stated, the cables 50, 52 include conductors 60, 62 which correspond to the wires 80,82 of each thermocouple 33. The conductors 64, 66, 68 correspond to the connections with the RTDs 46 and extend to the controller 90 to provide resistance input. The conductors 64, 66, 68 of cable 54 are omitted merely for clarity but may be connected to the backside of the board 44 or the front side depending on the RTD location, or alternatively may be directly connected to the RTD 46 if no printed circuit board 44 is utilized.

According to the depicted embodiment, the thermocouple wires 80, 82 are each individual wires. These conductors are KP and KN conductors, also generally referred to as thermoelement wires. The controller cables 50, 52 are multi-conductor cables and each include two conductors, according to the instant exemplary embodiment. The thermocouple wires 80, 82 extend over the printed circuit board 44 and around the backside of the printed circuit board 44. The wires 80, 82 then return to the depicted side of the board 44 where they are joined by splices 48 with controller cables 50, 52. The cables 50, 52 are formed of copper or copper-based material which is much lower cost than the thermoelectric wires or conductors utilized in the thermocouple wires 80, 82. These cables may be run longer distances at a reduced cost to the controller 90.

The joint 42 further comprises additional controller cables 54, 56 which are multi-conductor cables. According to the present embodiment, the cables 54, 56 are each 3-conductor cable. Each of the 3-conductor cables is bonded, welded, soldered or otherwise providing an electrical connection between the resistance temperature detector 46 and the conductors of the cables 54, 56 through the traces of the printed circuit board 44. According to a second embodiment, the conductors of cables 54,56 are directly connected to the RTDs 46, rather than connected by way of the printed circuit board 44 and traces thereon.

Referring now to FIG. 6, a side view of the joint 42 is depicted wherein the thermocouple wires 80, 82 are better shown wrapped about the printed circuit board 44. However, this is merely exemplary and other forms of connection may be utilized.

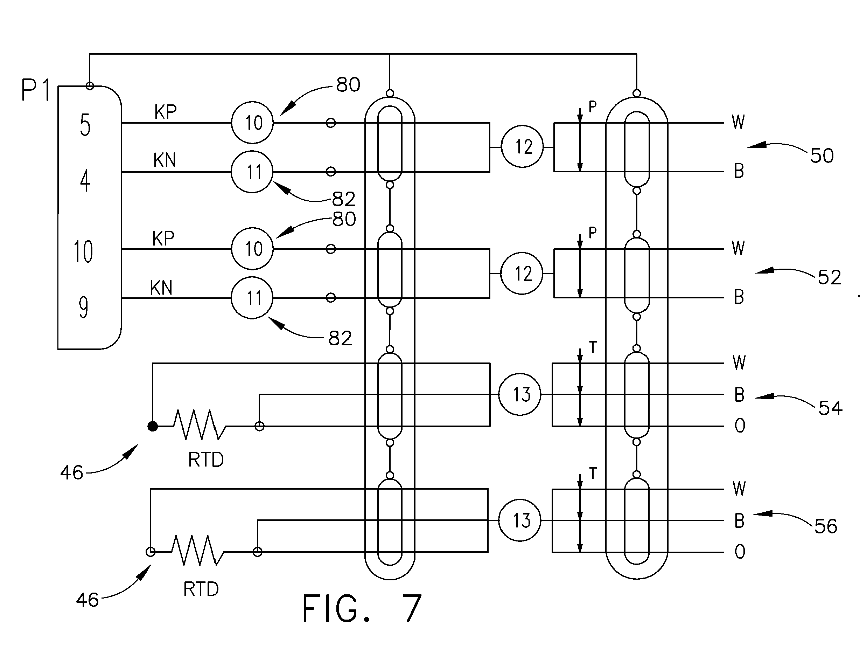

Referring now to FIG. 7, a wiring diagram is depicted which shows the 3-conductor cables 54, 56 in electrical communication with the resistance temperature detectors 46. Additionally, the diagram depicts the 2-conductor controller cables 50, 52 in electrical connection with the thermocouple wires 80, 82. Again, either embodiment, with or without the printed circuit board 44, may utilize this wiring architecture.

To understand the operation of the assembly or joint, one must understand the following. To measure the temperature using a thermocouple, one cannot simply connect the thermocouple to a voltmeter or other measurement system because the voltage measured is proportional to the temperature difference between the primary junction at the thermocouple 33 and the junction where the voltage is being measured, for example splice 48. Therefore, to know the absolute temperature at the thermocouple 33, the temperature where the thermocouple 33 is connected to the measurement device, the joint 42, must also be known.

The joint measures the temperature at the joint 42 by way of the RTDs 46 which are approximate to the temperatures measured through the backshell 36. The backshell 36 is formed of a conductive material so that the RTD 46 may sense the temperature through the backshell 36. The temperature at the thermocouples 33 is measured by such structure and a signal passes through the wires 80, 82 to the cables 50, 52 and on to the controller 90. Therefore the assembly includes the temperature at the primary junction, thermocouple 33, and at the junction where the voltage is being measured, at splice 48.

The voltage at the joint 42, including the splices 48 and RTDs 46, is proportional to the temperature difference between thermocouple 33, which is sensing the desired temperature, and the RTDs 46 at splices 48. Since copper wire is connected between the controller 90 and the splices 48 and RTDs 46, no additional voltage is contributed between the temperature difference of the junction, including splices 48 and RTDs 46, and the point where the voltage is measured by the controller 90. To determine the temperature at thermocouple 33, one must know the temperatures of junctions of splices 48, which is obtained by the RTDs 46. Then the measured voltage and the known temperature of the splices 48 junction are used to determine the temperature at thermocouple 33.

The foregoing description of structures and methods has been presented for purposes of illustration. It is not intended to be exhaustive or to limit the structures and methods to the precise forms and/or steps disclosed, and obviously many modifications and variations are possible in light of the above teaching. Features described herein may be combined in any combination. Steps of a method described herein may be performed in any sequence that is physically possible. It is understood that while certain forms of composite structures have been illustrated and described, it is not limited thereto and instead will only be limited by the claims, appended hereto.

While multiple inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

Examples are used to disclose the embodiments, including the best mode, and also to enable any person skilled in the art to practice the apparatus and/or method, including making and using any devices or systems and performing any incorporated methods. These examples are not intended to be exhaustive or to limit the disclosure to the precise steps and/or forms disclosed, and many modifications and variations are possible in light of the above teaching. Features described herein may be combined in any combination. Steps of a method described herein may be performed in any sequence that is physically possible.

All definitions, as defined and used herein, should be understood to control over dictionary definitions, definitions in documents incorporated by reference, and/or ordinary meanings of the defined terms. The indefinite articles "a" and "an," as used herein in the specification and in the claims, unless clearly indicated to the contrary, should be understood to mean "at least one." The phrase "and/or," as used herein in the specification and in the claims, should be understood to mean "either or both" of the elements so conjoined, i.e., elements that are conjunctively present in some cases and disjunctively present in other cases.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

Various aspects and embodiments of the present invention are defined by the following numbered clauses:
1. An embedded resistance temperature detector assembly, comprising:
   a circuit board;
   a resistance temperature detector (RTD) electrically connected to said circuit board;
   a plurality of thermocouple wires including at least one KN wire and KP wire; and,
   a plurality of controller conductors wherein some of said controller conductors are in electrical communication with said RTD and some of said controller conductors are in electrical communication with said plurality of thermocouple wires. The embedded resistance temperature detector assembly of Claim 1 further comprising a strain relief tie for said plurality of conductors.
2. The embedded resistance temperature detector assembly of Clause 1, said controller conductors being copper-based wires.
3. The embedded resistance temperature detector assembly of any preceding clause, further comprising said at least one KN wire connected on a first side of said circuit board and said at least one KP wire connected on said first side of said circuit board.
4. The embedded resistance temperature detector assembly of any preceding Clause, further comprising said at least one KN wire and said at least one KP wire on each of a first side and second side of said circuit board.
5. The embedded resistance temperature detector assembly of any preceding Clause, further comprising a backshell.
6. The embedded resistance temperature detector assembly of any preceding Clause, further comprising potting material in said backshell.
7. The embedded resistance temperature detector assembly of any preceding Clause, said circuit board and resistance temperature detector located in said backshell.
8. The embedded resistance temperature detector assembly of any preceding Clause, further comprising a controller which receives signals from said controller cables.
9. An embedded resistance temperature detector assembly, comprising:
   a circuit board for electrical connection with a controller and a thermocouple;
   a plurality of thermoelectric wires extending from said thermocouple, said thermoelectric wires being at least one KN wire and at least one KP wire;
   a resistance temperature detector in electrical communication with said circuit board;
   a plurality of conductors in electrical communication with said circuit board and said controller;
   said plurality of conductors including a portion of conductors in communication with said thermoelectric wires;
   wherein said controller determines a temperature at a splice between said thermoelectric wires and said conductors by way of a resistance;
   and wherein said controller determines a temperature at said thermocouple using said temperature at said splice.
10. The embedded resistance temperature detector assembly of any preceding Clause, further comprising a backshell housing said assembly.
11. The embedded resistance temperature detector assembly of any preceding Clause, further comprising an interface connected to said backshell.
12. The embedded resistance temperature detector assembly of any preceding Clause, wherein said thermoelectric wires are in electrical communication with said interface.
13. An embedded resistance temperature detector assembly, comprising:
   a first multi-conductor controller cable and a second multi-conductor controller cable;
   said first multi-conductor controller cable in electrical communication with a first resistance temperature detector;
   said second multi-conductor controller cable in electrical communication with a second resistance temperature detector;
   a first pair of thermocouple KN and KP conductors;
   a second pair of thermocouple KN and KP conductors;
   all of said controller cables in electrical communication with a controller;
   said first and second pair of thermocouple conductors in communication with at least one thermocouple.
14. The assembly of any preceding Clause, further comprising a printed circuit board.
15. The assembly of any preceding Clause, said printed circuit board having said RTD electrically connected thereto.
16. The assembly of any preceding Clause, said multi-conductors of said cables soldered to said printed circuit board.
17. The assembly of any preceding Clause, said multi-conductors of said first and second cables soldered directly to said RTDs.
18. The assembly of any preceding Clause, further comprising potting material.
19. The assembly of any preceding Clause, further comprising a backshell wherein said potting material is disposed.
20. The assembly of any preceding Clause, further comprising a plug interface in electrical communication with said first and second pair of thermocouple conductors.

## Claims

1. An embedded resistance temperature detector assembly, comprising:
a circuit board;
a resistance temperature detector (RTD) electrically connected to said circuit board;
a plurality of thermocouple wires including at least one KN wire and KP wire; and,
a plurality of controller conductors wherein some of said controller conductors are in electrical communication with said RTD and some of said controller conductors are in electrical communication with said plurality of thermocouple wires.

2. The embedded resistance temperature detector assembly of Claim 1, further comprising a strain relief tie for said plurality of conductors.

3. The embedded resistance temperature detector assembly of any preceding Claim, said controller conductors being copper-based wires.

4. The embedded resistance temperature detector assembly of any preceding Claim, further comprising said at least one KN wire connected on a first side of said circuit board and said at least one KP wire connected on said first side of said circuit board.

5. The embedded resistance temperature detector assembly of any preceding Claim, further comprising said at least one KN wire and said at least one KP wire on each of a first side and second side of said circuit board.

6. The embedded resistance temperature detector assembly of any preceding Claim, further comprising a backshell.

7. The embedded resistance temperature detector assembly of Claim 6, further comprising potting material in said backshell.

8. The embedded resistance temperature detector assembly of any preceding Claim, said circuit board and resistance temperature detector located in said backshell.

9. The embedded resistance temperature detector assembly of any preceding Claim, further comprising a controller which receives signals from said controller cables.

10. An embedded resistance temperature detector assembly, comprising:
a circuit board for electrical connection with a controller and a thermocouple;
a plurality of thermoelectric wires extending from said thermocouple, said thermoelectric wires being at least one KN wire and at least one KP wire;
a resistance temperature detector in electrical communication with said circuit board;
a plurality of conductors in electrical communication with said circuit board and said controller;
said plurality of conductors including a portion of conductors in communication with said thermoelectric wires;
wherein said controller determines a temperature at a splice between said thermoelectric wires and said conductors by way of a resistance;
and wherein said controller determines a temperature at said thermocouple using said temperature at said splice.

11. The embedded resistance temperature detector assembly of Claim 10, further comprising a backshell housing said assembly.

12. The embedded resistance temperature detector assembly of Claim 11, further comprising an interface connected to said backshell.

13. The embedded resistance temperature detector assembly of Claim 12, wherein said thermoelectric wires are in electrical communication with said interface.

14. An embedded resistance temperature detector assembly, comprising:
a first multi-conductor controller cable and a second multi-conductor controller cable;
said first multi-conductor controller cable in electrical communication with a first resistance temperature detector;
said second multi-conductor controller cable in electrical communication with a second resistance temperature detector;
a first pair of thermocouple KN and KP conductors;
a second pair of thermocouple KN and KP conductors;
all of said controller cables in electrical communication with a controller;
said first and second pair of thermocouple conductors in communication with at least one thermocouple.

15. The assembly of Claim 14, further comprising a printed circuit board.
